# EUROPÄISCHE PATENTSCHRIFT

(11) **EP 0 762 081 B1**
(45) Veröffentlichungstag und Bekanntmachung des Hinweises auf die Patenterteilung: **18.10.2000**
(21) Anmeldenummer: 96108240.1
(22) Anmeldetag: 23.05.1996
(51) Int. Cl.: G01D 5/00, G01D 5/02

(54) **Winkelmesseinrichtung**
Angular measurement device
Capteur d'angle de rotation

(30) Priorität: 05.08.1995 DE 19534063
(43) Veröffentlichungstag der Anmeldung: 12.03.1997
(73) Patentinhaber: Dr. Johannes Heidenhain GmbH, 83292 Traunreut (DE)
(72) Erfinder: Feichtinger, Kurt, 83349 Palling (DE)

(56) Entgegenhaltungen:
- DE-U- 8 915 109

## Beschreibung

Die Erfindung betrifft eine Winkelmeßeinrichtung gemäß dem Oberbegriff des Anspruches 1.

Eine derartige Winkelmeßeinrichtung ist beispielsweise aus der DE 89 15 109 U1 und der DE-PS 32 06 875 bekannt.

Der Nachteil dieser Winkelmeßeinrichtungen besteht darin, daß sie zwar eine Verdrehung der miteinander gekoppelten Teile verhindern, aber ein radialer und axialer Ausgleich nur mit relativ hohen Kräften erreicht wird. Diese Kräfte wirken auf die Lager der Winkelmeßeinrichtung und Antriebseinrichtung und können die Lebensdauer verringern.

Weitere Winkelmeßeinrichtungen mit einer Kupplung sind aus der JP 62-156822 U, JP 62-148916 U, JP 62-155313 U, JP 6-2138 U und der JP 2-85711 A bekannt. Die dort gezeigten Kupplungen bestehen ausschließlich aus Blattfederarmen, die in einer einzigen Ebene angeordnet sind. Eine verdrehsteife und kräftefreie Ankopplung mit gleichzeitiger Möglichkeit der Auslenkung in radialen und axialen Richtungen ist nicht gewährleistet.

Aufgabe der Erfindung ist es, eine Winkelmeßeinrichtung zu schaffen, die kompakt aufgebaut ist, eine einfache und verschleißfeste Ankopplung an ein zu messendes Objekt gewährleistet und eine hohe Meßgenauigkeit erreicht.

Diese Aufgabe wird durch eine Winkelmeßeinrichtung mit den Merkmalen des Anspruches 1 gelöst.

Die mit der Erfindung erzielten Vorteile bestehen insbesondere darin, daß die Kupplung der Winkelmeßeinrichtung wenig Raum beansprucht, eine reibungsfreie und hochgenau Winkelübertragung zwischen den zwei zu verbindenden Teilen zuläßt und mit der trotzdem Verlagerungen der miteinander zu kuppelnden Teile sowohl in radialer als auch in axialer Richtung weitgehend kräftefrei ausgeglichen werden.

Vorteilhafte Ausbildungen der Erfindung entnimmt man den abhängigen Ansprüchen.

Ausführungsbeispiele der Erfindung sind in den Zeichnungen dargestellt.

Es zeigt
- Figur 1: eine Ansicht einer Winkelmeßeinrichtung;
- Figur 2: eine perspektivische Ansicht der Kupplung der Winkelmeßeinrichtung gemäß Figur 1;
- Figur 3: die Kupplung gemäß Figur 2 mit einem Kraftdiagramm;
- Figur 4: eine Variante einer Kupplung und
- Figur 5: eine weitere Variante einer Kupplung.

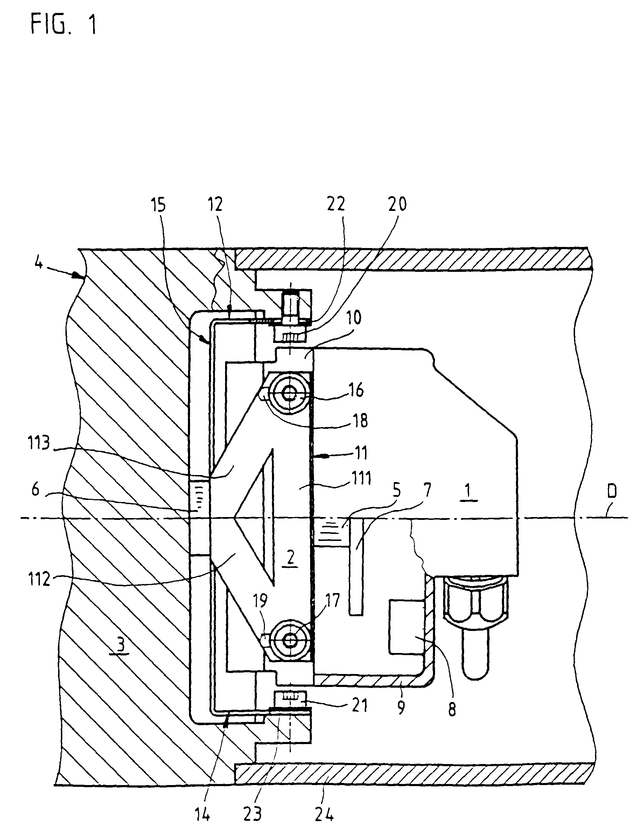

Eine in Figur 1 gezeigte Winkelmeßeinrichtung 1 ist über eine Kupplung 2 mit dem stationären Objekt 3 einer Antriebseinrichtung 4 verbunden. Die Welle 5 der Winkelmeßeinrichtung 1 ist starr mit der Welle 6 der Antriebseinrichtung 4 gekoppelt. Die Winkellage der Welle 6 relativ zum stationären Objekt 3 wird von der Winkelmeßeinrichtung 1 gemessen, indem eine mit der Welle 5 verbundene Teilscheibe 7 in bekannter Weise von einer Abtasteinheit 8 abgetastet wird. Im dargestellten Beispiel ist die Abtasteinheit 8 starr am Gehäuse 9 der Winkelmeßeinrichtung 1 befestigt und das Gehäuse 9 wiederum starr an einem Montageflansch 10 der Winkelmeßeinrichtung 1 montiert. Um die Abtasteinheit 8 verdrehsteif, jedoch radial und axial nachgiebig am stationären Objekt 3 der Antriebseinrichtung 4 zu befestigen, ist die Kupplung 2 vorgesehen.

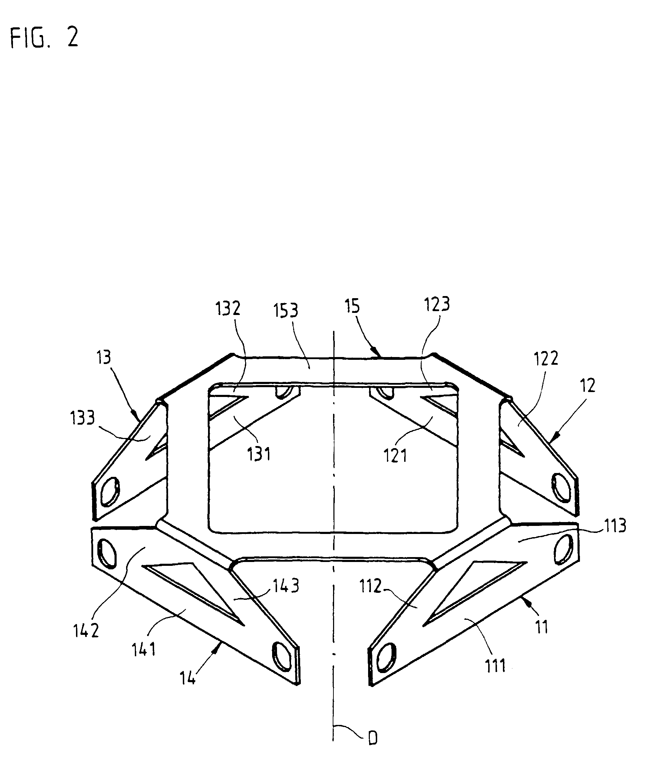

Die Kupplung 2 ist einstückig als Stanz- und Biegeteil ausgebildet und aus einem Material mit hoher Wechselfestigkeit, zum Beispiel Federstahl hergestellt. Die Kupplung 2 ist in Figur 2 zum besseren Verständnis räumlich dargestellt. In besonders bevorzugter Weise besteht die Kupplung aus vier ebenen Laschen 11, 12, 13, 14 welche zumindest annähernd parallel zur Drehachse D der Wellen 5 und 6 verlaufen, wobei jeweils zwei Laschen 11, 13 und 12, 14 parallel zueinander ausgerichtet sind und somit jeweils eine Parallelführung bilden. Die Laschen 11, 12 und 13, 14 sind rechtwinkelig zueinander ausgerichtet, wodurch zwei rechtwinkelig zueinander wirkende Parallelführungen gebildet werden, die ausschließlich eine Auslenkung der Winkelmeßeinrichtung 1 relativ zum stationären Objekt 3 in allen radialen Richtungen zulassen. Alle Laschen 11 bis 14 sind an einem Ende mit einer weiteren Lasche 15 verbunden, die in einer Ebene senkrecht zur Drehachse D liegt und ausschließlich eine axiale Auslenkung der Winkelmeßeinrichtung 1 relativ zum stationären Objekt 3 zuläßt. Die freien Enden von ersten achsparallelen und zueinander parallelen Laschen 11, 13 sind mittels Schrauben 16, 17 in Langlöchern 18, 19 an dem stationären Objekt 3 der Antriebseinrichtung 4 befestigt. Die freien Enden der orthogonal dazu liegenden parallel zueinander ausgerichteten Laschen 12, 14 sind ebenfalls mittels Schrauben 20, 21 in Langlöchern 22, 23 mit dem Montageflansch 10 der Winkelmeßeinrichtung 1 verbunden. Ein Gehäuse 24 umschließt die Antriebseinrichtung 4 sowie die Kupplung 2. Das stationäre Objekt 3 der Antriebseinrichtung 4 ist beispielsweise der stationäre Teil eines Motors. Der Montageflansch 10 ist ein stationärer Teil der Winkelmeßeinrichtung, er kann auch direkt vom Gehäuse 9 oder vom Träger der Abtasteinheit 8 gebildet sein.

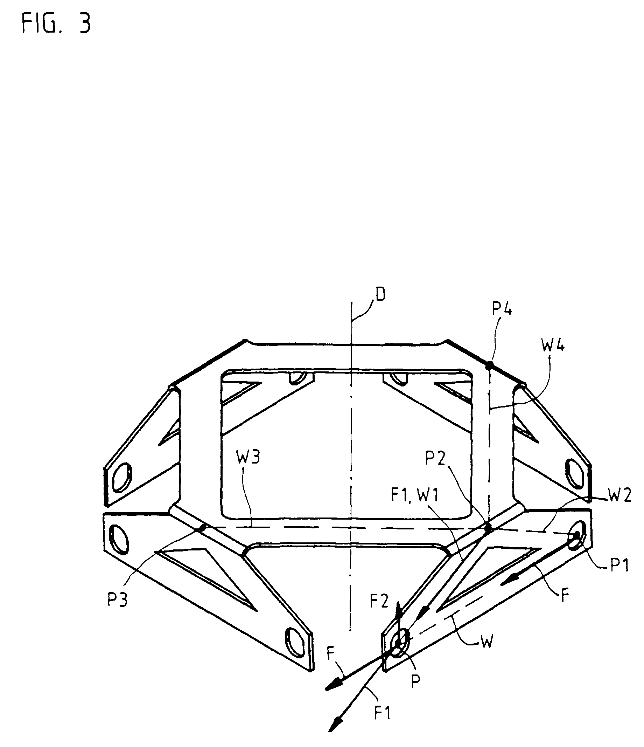

Gemäß der Erfindung beinhaltet jede der Laschen 11 bis 15 mehrere Blattfederarme 111 bis 113, 121 bis 123, 131 bis 133, 141 bis 143, 151 bis 154 die derart ausgebildet und ausgerichtet sind, daß sie in Richtung der Wirkungslinien W verlaufen, in welchen bei einer Verdrehung der Welle 6 die Kräfte F auf die Kupplung 2 eingeleitet werden. Zur Verdeutlichung dieser Kraftverhältnisse sind die Wirkungslinien W in die in Figur 3 dargestellte Kupplung 2 eingezeichnet. Es wird angenommen, daß das untere Ende der Lasche 11 am Montageflansch 10 der Winkelmeßeinrichtung 1 befestigt ist. Bei einer Verdrehung der Welle 5 über die Welle 6 wird eine Kraft F an den Punkten P und P1 auf die Kupplung 2 eingeleitet. Diese Kraft F wird über die Kupplung 2 auf den stationären Teil 3 der Antriebseinrichtung 4 übertragen. Diese Übertragung erfolgt von der Lasche 11 über den Verbindungsbereich mit dem Punkt P2 zu der Lasche 15 und von dort über die weiteren Verbindungsbereiche mit den Punkten P3 und P4 zu den Laschen 12 und 14. Die am Punkt P einwirkende Kraft F wird somit aufgeteilt in die Kräfte F1 und F2. Die Wirkungslinie W1 der Kraft F1 geht durch die Punkte P und P2 sowie die Wirkungslinie W2 durch die Punkte P1 und P2. Die Wirkungslinien W, W1 und W2 bilden ein Dreieck. Die Blattfederarme 111 bis 113 der Lasche 11 verlaufen entlang dieser Wirkungslinien W, W1 und W2 und sind möglichst schmal ausgebildet, so daß die Außenkonturen ebenfalls zumindest weitgehend parallel zu den Wirkungslinien W, W1 und W2 verlaufen. Da die Befestigung der Lasche 11 entlang der Wirkungslinie W erfolgt, kann dieser Blattfederarm 111 auch weggelassen werden.

Die am Punkt P2 angreifende Kraft F1 in Richtung der Wirkungslinie W1 wird wiederum aufgeteilt und muß über die Lasche 15 weiter aufgenommen werden. Die möglichen Wirkungslinien, in denen die Kraft F1 einwirken kann, sind mit W3 und W4 bezeichnet. Die Blattfederarme 151 und 152 verlaufen entlang dieser Wirkungslinien W3 und W4. Die Lasche 15 weist somit eine zentrische, zumindest annähernd quadratische Öffnung auf, die nach Art eines Fachwerkes von den Blattfederarmen 151 bis 154 umgeben ist. Die Blattfederarme 151 bis 154 bilden somit ein Viereck.

Diese fachwerkartige Ausbildung aller Laschen 11 bis 15 hat den Vorteil, daß die Kupplung 2 äußerst verdrehsteif ist, aber radiale und axiale Ausgleichsbewegungen zwischen der Winkelmeßeinrichtung 1 und der Welle 6 ohne große Rückstellkräfte zuläßt. Der Biegequerschnitt bzw. die Biegesteifigkeit der Laschen 11 bis 15 ist gemäß der Erfindung minimal und die Torsionssteifigkeit maximal.

Es ist besonders vorteilhaft, wenn ein symmetrischer Aufbau gewählt ist, bei dem alle vier Laschen 11 bis 14 Blattfederarme 111 bis 113, 121 bis 123, 131 bis 133, 141 bis 143 aufweisen, die fachwerkartig als Dreiecke ausgebildet sind. In jeder der Laschen 11 bis 14 befinden sich Langlöcher 18, 19, 22, 23 deren Längsachsen parallel zur Drehachse D verlaufen und somit eine Justierung zwischen der Winkelmeßeinrichtung 1 und der Antriebseinrichtung 4 erlauben.

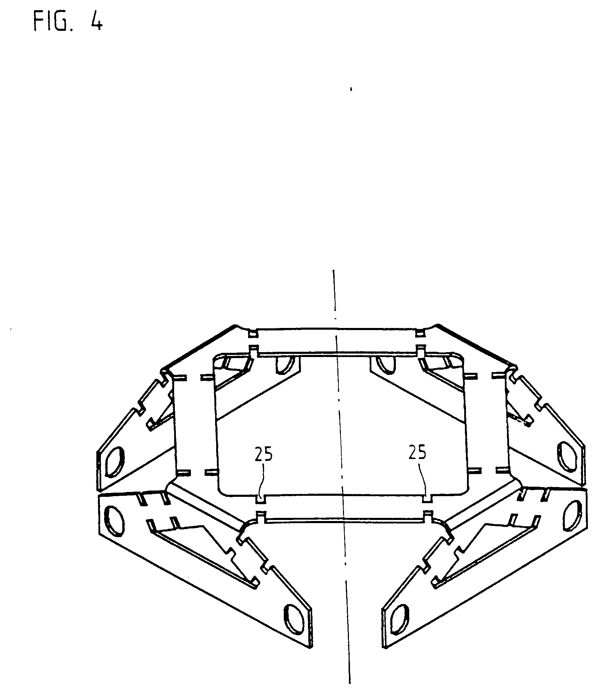

Figur 4 zeigt eine Variante der Kupplung 2, bei der die fachwerkartigen Blattfederarme 111 bis 113, 121 bis 123, 131 bis 133, 141 bis 143, 151 bis 154 durch Einkerbungen 25 in den gewünschten Freiheitsgraden (radial und axial zur Drehachse D) möglichst flexibel ist.

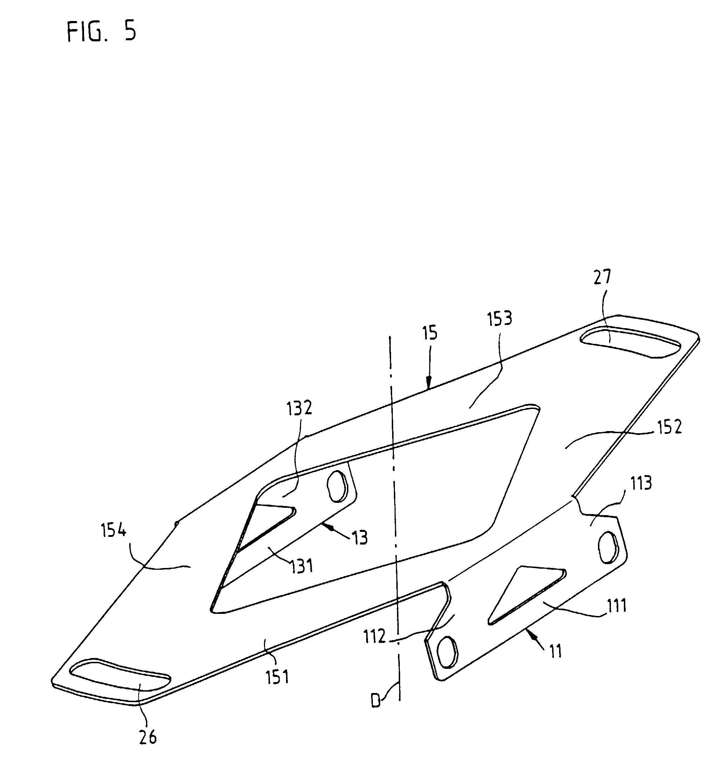

Eine weitere Variante einer Kupplung 2 ist in Figur 5 dargestellt. Die beiden parallel zueinander und parallel zur Drehachse D ausgerichteten Laschen 11 und 13 entsprechen den Laschen 11 und 13 der Kupplung 2 gemäß Figur 2, weshalb gleiche Bezugszeichen verwendet wurden. Die freien Enden der Laschen 11 und 13 sind zur Befestigung an dem Montageflansch 10 der Winkelmeßeinrichtung 1 ausgebildet. Der wesentliche Unterschied gegenüber der in Figur 2 dargestellten Kupplung 2 besteht darin, daß keine weiteren zur Drehachse D parallelen Laschen vorgesehen sind. Zur Befestigung der Kupplung 2 an der Antriebseinrichtung 4 sind die freien Enden der Lasche 15 ausgebildet. Die ein Viereck bildenden Blattfederarme 151 bis 154 der Lasche 15 liegen in einer Ebene senkrecht zur Drehachse D. Die Lasche 15 wird an den beiden diametral gegenüberliegenden freien Enden über die Langlöcher 26, 27 an der Antriebseinrichtung 4 befestigt. Diese Befestigungsstellen sind jeweils um 90° gegenüber den Laschen 11 und 13 angeordnet. Die fachwerkartige Ausbildung der Laschen 11, 13 und 15 entspricht dem Beispiel gemäß Figur 2.

Die erfindungsgemäß ausgebildeten und befestigten Kupplungen 2 ermöglichen der gesamten Winkelmeßeinrichtung 1 den auftretenden Taumelbewegungen der Welle 6 der Antriebseinrichtung 4 zu folgen, ohne daß in Bezug auf die zumindest annähernd gemeinsame Drehachse D die Abtasteinheit 8 und das stationäre Objekt 3 der Antriebseinrichtung 4 eine Verdrehung gegeneinander durchführen können. Es ist eine hohe Genauigkeit der Winkelmessung gewährleistet, ohne daß Zwangskräfte einwirken, obwohl eine starre Kopplung der Wellen 5 und 6 ermöglicht wird, welche in der Praxis nie fehlerfrei fluchten. Exzentrizitäten der Wellen 5 und 6 sowie Winkelfluchtungsfehler der Wellen 5 und 6 werden durch die Erfindung annähernd kräftefrei ausgeglichen.

Bei der in Figur 1 dargestellten Ausführungsform ist die Kupplung 2 zwischen dem stationären Objekt 3 und dem Montageflansch 10 angeordnet. In nicht dargestellter Weise kann sie auch innerhalb der Winkelmeßeinrichtung 1 zwischen der Abtasteinheit 8 und dem Gehäuse 9 oder zwischen der Abtasteinheit 8 und dem Montageflansch 10 oder auch zwischen der Abtasteinheit 8 und dem Gehäuse 24 angeordnet sein. Die Kupplung 2 kann auch bei Winkelmeßeinrichtungen 1 eingesetzt werden, die kein Gehäuse 9 und/oder keinen Montageflansch 10 aufweisen.

In nicht gezeigter Weise kann die Kupplung auch aus nur einer achsparallelen Lasche und einer senkrecht dazu verlaufenden weiteren Lasche bestehen. Das freie Ende der einen Lasche ist dabei am stationären Objekt der Antriebseinrichtung und das freie Ende der weiteren Lasche am Montageflansch oder an der Abtasteinheit der Winkelmeßeinrichtung befestigt. Jede der beiden Laschen besteht aus Blattfederarmen, die dreieckförmig angeordnet sind, wobei sich jeweils zwei Blattfederarme einer Lasche im Verbindungsbereich beider Laschen schneiden und die dem Schnittpunkt gegenüberliegenden freien Enden der Laschen als Befestigungsstellen dienen, wie bei den Laschen 11, 12, 13, 14 zu Figur 2 erläutert.

Es können auch mehrere derartiger Kupplungen am Umfang des Montageflansches der Winkelmeßeinrichtung vorgesehen sein.

Als Winkelmeßeinrichtung 1 kann ein inkrementaler Drehgeber - vorzugsweise lichtelektrischer Art -, ein Absolutwertgeber, ein Multiturn oder ein Resolver Verwendung finden.

## Patentansprüche

1. Winkelmeßeinrichtung zur Messung der Winkellage zwischen einem stationären Objekt (3) und einem hierzu relativ drehbaren Objekt (6), indem eine Maßverkörperung (7) von einer Abtasteinheit (8) abgetastet wird, wobei die Abtasteinheit (8) über eine Kupplung (2) verdrehsteif, jedoch radial und axial nachgiebig am stationären Objekt (3) ankoppelbar ist, und die Kupplung (2) aus federndem Material mit zumindest zwei senkrecht zueinander verlaufenden Laschen (11, 15; 12, 15; 13, 15; 14, 15) geformt ist, wobei eine der Laschen (11, 12, 13, 14) parallel zur Drehachse (D) des drehbaren Objektes (6) angeordnet ist, dadurch gekennzeichnet, daß die Laschen (11, 12, 13, 14, 15) mehrere Blattfederarme (111 bis 113, 121 bis123, 131 bis133, 141 bis 143, 151 bis 154) aufweisen die derart ausgebildet und ausgerichtet sind, daß sie in Richtung der Wirkungslinien (W1, W2, W3, W4) verlaufen, in welchen bei der Verdrehung des drehbaren Objektes die Kräfte (F) eingeleitet werden.

2. Winkelmeßeinrichtung nach Anspruch 1, dadurch gekennzeichnet, daß die Außenkonturen der Blattfederarme (111 bis 113, 121 bis 123, 131 bis 133, 141 bis 143, 151 bis 154) zumindest weitgehend parallel zu den Wirkungslinien (W1, W2, W3, W4) der eingeleiteten Kräfte (F) verlaufen.

3. Winkelmeßeinrichtung nach Anspruch 1 oder 2, dadurch gekennzeichnet, daß die Kupplung (2) einstückig aus federndem Material geformt ist.

4. Winkelmeßeinrichtung nach einem der Ansprüche 1 bis 3, dadurch gekennzeichnet, daß die Kupplung (2) mehrere parallel zueinander verlaufende Laschen (11, 13; 12, 14) aufweist, die eine Parallelführung bilden.

5. Winkelmeßeinrichtung nach Anspruch 4, dadurch gekennzeichnet, daß die parallel zueinander verlaufenden Laschen (11, 13; 12, 14) zumindest weitgehend parallel zu der Drehachse (D) des drehbaren Objektes (6) angeordnet sind und über die senkrecht dazu angeordnete Lasche (15) miteinander verbunden sind.

6. Winkelmeßeinrichtung nach Anspruch 5, dadurch gekennzeichnet, daß zwei parallel zueinander und parallel zur Drehachse (D) verlaufende Laschen (11, 13) vorgesehen sind, die jeweils an einem Ende mit der Abtasteinheit (8) oder dem stationären Objekt (3) verbindbar sind und mit dem gegenüberliegenden Ende mit der senkrecht dazu angeordneten Lasche (15) verbunden sind, wobei diese letztgenannte Lasche (15) an diametral gegenüberliegenden Bereichen mit dem stationären Objekt (3) oder der Abtasteinheit (8) verbindbar sind.

7. Winkelmeßeinrichtung nach Anspruch 5, dadurch gekennzeichnet, daß die Kupplung (2) zur radialen Nachgiebigkeit der Abtasteinheit (8) vier Laschen (11, 12, 13, 14) aufweist, die zwei orthogonal angeordnete Federparallelogramme bilden und zumindest weitgehend parallel zu der Drehachse (D) des drehbaren Objektes (6) angeordnet sind, wobei jeweils die einen Enden der Laschen (11, 12, 13, 14) mit der senkrecht dazu angeordneten Lasche (15) verbunden sind und die anderen Enden zweier diametral angeordneter Laschen (11, 13) mit der Abtasteinrichtung (8) verbindbar sind und die anderen Enden der zwei weiteren diametral angeordneten Laschen (12, 14) mit dem stationären Objekt (3) verbindbar sind.

8. Winkelmeßeinrichtung nach einem der vorhergehenden Ansprüche, dadurch gekennzeichnet, daß die Blattfederarme (111 bis 113, 121 bis 123, 131 bis 133, 141 bis 143) einer zur Drehachse (D) parallel angeordneten Lasche (11, 12, 13, 14) ein Dreieck bilden, wobei ein Schenkel dieses Dreieckes an dem freien Ende zur Befestigung an der Abtasteinheit (8) oder dem stationären Objekt (3) verläuft und wobei die dem Schenkel gegenüberliegende Spitze dieses Dreieckes zumindest in der Nähe des Verbindungsbereiches zur senkrecht zur Drehachse (D) verlaufenden Lasche (15) liegt.

9. Winkelmeßeinrichtung nach Anspruch 8, dadurch gekennzeichnet, daß die senkrecht zur Drehachse (D) verlaufende Lasche (15) aus vier Blattfederarmen (151 bis 154) gebildet ist, die ein Viereck bilden, wobei sich jeweils zwei dieser Blattfederarme (151 bis 154) im Bereich der Spitze mit zwei Blattfederarmen (112, 113; 122, 123; 132, 133; 142, 143) eines der Dreiecke der parallel zur Drehachse (D) verlaufenden Laschen(11, 12, 13, 14) treffen.

## Claims

1. Angle measuring device to measure the angular position between a stationary object (3) and an object (6) which may be rotated relative thereto, by a material measure (7) being scanned by a scanner unit (8), the scanner unit (8) being able to be coupled via a coupling (2) to the stationary object (3), so as to be stiff against torsion yet radially and axially yielding, and the coupling (2) being formed from resilient material with at least two link plates (11, 15; 12, 15; 13, 15; 14, 15), running perpendicular to one another, one of the link plates (11, 12, 13, 14) being disposed parallel to the rotational axis (D) of the rotatable object (6), **characterised in that** the link plates (11, 12, 13, 14, 15) have a plurality of leaf spring arms (111 to 113, 121 to 123, 131 to 133, 141 to 143, 151 to 154), which are configured and aligned in such a way that they run in the direction of the lines of action (W1, W2, W3, W4), in which forces (F) are introduced when the rotatable object is twisted.

2. Angle measuring device according to claim 1, **characterised in that** the outer contours of the leaf spring arms (111 to 113, 121 to 123, 131 to 133, 141 to 143, 151 to 154) run at least largely parallel to the lines of action (W1, W2, W3, W4) of the forces (F) introduced.

3. Angle measuring device according to claim 1 or 2, **characterised in that** the coupling (2) is formed as one piece from resilient material.

4. Angle measuring device according to one of claims 1 to 3, **characterised in that** the coupling (2) has a plurality of link plates (11, 13; 12, 14) running parallel to one another, which form a parallel guide.

5. Angle measuring device according to claim 4, **characterised in that** the link plates (11, 13; 12, 14), running parallel to one another, are disposed at least largely parallel to the rotational axis (D) of the rotatable object (6) and are connected to one another via the link plate (15) disposed perpendicular thereto.

6. Angle measuring device according to claim 5, **characterised in that** two link plates (11, 13), running parallel to one another and parallel to the rotational axis (D), are provided which may be respectively connected at one end to the scanner unit (8) or the stationary object (3), and are connected at the opposite end to the link plate (15) disposed perpendicular thereto, this last-named link plate (15) being able to be connected at diametrically opposite regions to the stationary object (3) or the scanner unit (8).

7. Angle measuring device according to claim 5, **characterised in that** the coupling (2) has, for radial yielding of the scanner unit (8), four link plates (11, 12, 13, 14) which form two spring parallelograms, disposed orthogonal, and are disposed at least largely parallel to the rotational axis (D) of the rotatable object (6), respectively the one end of the link plates (11, 12, 13, 14) being connected to the link plate (15) disposed perpendicular thereto, and the other ends of two diametrically disposed link plates (11, 13) being able to be connected to the scanner unit (8), and the other ends of the two further diametrically disposed link plates (12, 14), being able to be connected to the stationary object (3).

8. Angle measuring device according to one of the preceding claims, **characterised in that** the leaf spring arms (111 to 113, 121 to 123, 131 to 133, 141 to 143) of a link plate (11, 12, 13, 14,), disposed parallel to the rotational axis (D), form a triangle, one side of this triangle running at the free end for securing to the scanner unit (8) or the stationary object (3), and the apex of this triangle, lying opposite the side, lying at least in the proximity of the connecting region to the link plate (15) running perpendicular to the rotational axis (D).

9. Angle measuring device according to claim 8, **characterised in that** the link plate (15) running perpendicular to the rotational axis (D), is formed from four leaf spring arms (151 to 154) which form a quadrilateral, respectively two of these leaf spring arms (151 to 154) in the region of the apex meeting two leaf spring arms (112, 113; 122, 123; 132, 133; 142, 143) of one of the triangles of the link plates (11, 12, 13, 14) running parallel to the rotational axis (D).

## Revendications

1. Dispositif de mesure d'angles pour mesurer la position angulaire entre un objet (3) stationnaire et un objet (6) tournant par rapport à celui-ci, par palpage d'une mesure matérialisée (7) à l'aide d'une unité de palpage (8), l'unité de palpage (8) étant couplée de manière rigide en rotation, mais de manière flexible dans les directions radiale et axiale, à l'objet stationnaire (3) par l'intermédiaire d'un moyen de couplage (2) et le moyen de couplage (2) étant réalisé en un matériau élastique avec au moins deux pattes (11,15; 12, 15; 13, 15; 14, 15) mutuellement perpendiculaires, l'une des pattes (11, 12, 13, 14) étant disposée parallèlement à l'axe de rotation (D) de l'objet tournant (6), caractérisé par le fait que les pattes (11, 12, 13, 14, 15) comportent plusieurs bras en tôle à ressort (111 à 113; 121 à 123; 131 à 133; 141 à 143; 151 à 154) qui sont conformés et disposés de manière telle qu'ils s'étendent dans la direction des lignes d'action (W1, W2, W3, W4) suivant lesquelles les forces (F) sont introduites lors de la rotation de l'objet tournant (6).

2. Dispositif de mesure d'angles selon la revendication 1, caractérisé par le fait que les contours extérieurs des bras en forme de ressort à lame (111 à 113; 121 à 123; 131 à 133; 141 à 143; 151 à 154) s'étendent au moins essentiellement parallèlement aux lignes d'action (W1, W2, W3, W4) des forces (F) introduites.

3. Dispositif de mesure d'angles selon la revendication 1 ou 2, caractérisé par le fait que le moyen de couplage (2) est réalisé d'une pièce en un matériau élastique.

4. Dispositif de mesure d'angles selon une des revendications 1 à 3, caractérisé par le fait que le moyen de couplage (2) comporte plusieurs pattes (11, 13; 12, 14) qui s'étendent parallèlement les unes aux autres et forment un guidage parallèle.

5. Dispositif de mesure d'angles selon la revendication 4, caractérisé par le fait que les pattes (11, 13; 12, 14) mutuellement parallèles sont au moins essentiellement parallèles à l'axe de rotation (D) de l'objet tournant (6) et sont reliées entre elles par l'intermédiaire deles pattes (15), disposée perpendiculairement à celles-ci.

6. Dispositif de mesure d'angles selon la revendication 5, caractérisé par le fait qu'il est prévu deux pattes (11, 13) mutuellement parallèles et parallèles à l'axe de rotation (D) qui sont reliées par une extrémité à l'unité de palpage (8) ou à l'objet stationnaire (3) et par l'extrémité opposée àles pattes (15) disposée perpendiculairement, cette dernière pattes (15) étant liée à l'objet stationnaire (3) ou à l'unité de palpage (8) en des régions diamétralement opposées.

7. Dispositif de mesure d'angles selon la revendication 5, caractérisé par le fait que le moyen de couplage (2), pour la flexibilité radiale de l'unité de palpage (8), comporte quatre pattes (11, 12, 13, 14) qui forment deux parallélogrammes flexibles disposés à angle droit et au moins essentiellement parallèlement à l'axe de rotation (D) de l'objet tournant (6), une extrémité des pattes (11, 12, 13, 14) étant reliée chaque fois àles pattes (15) disposée à angle droit et l'autre extrémité de deux pattes (11, 13) diamétralement opposées étant reliée à l'unité de palpage (8) et l'autre extrémité des deux autres pattes (12, 14) diamétralement opposées étant reliées à l'objet stationnaire (3).

8. Dispositif de mesure d'angles selon une des revendications précédentes, caractérisé par le fait que les bras en tôle à ressort (111 à 113, 121 à 123, 131 à 133, 141 à 143) d'une pattes (11, 12, 13, 14) disposée parallèlement à l'axe de rotation (D) forment un triangle, un côté dudit triangle étant disposé à l'extrémité libre pour la fixation sur l'unité de palpage (8) ou l'objet stationnaire (3) et le sommet opposé dudit triangle étant situé au moins dans le voisinage de la zone de liaison avecles pattes (11, 12, 13, 14) perpendiculaire à l'axe de rotation (D).

9. Dispositif de mesure d'angles selon la revendication 8, caractérisé par le fait que les pattes (11, 12, 13, 14) disposée perpendiculairement à l'axe de rotation (D) est formée de quatre bras en tôle à ressort (151 à 154), deux desdits bras en tôle à ressort (151 à 154) se rejoignant dans la région du sommet avec deux bras en tôle à ressort (112, 113; 122, 123 ; 132, 133; 142, 143) de l'un des triangles des pattes (11, 12, 13, 14) parallèles à l'axe de rotation (D).
